(19) **Europäisches Patentamt**
**European Patent Office**
**Office européen des brevets**

(11) **EP 3 827 039 B1**

(12) **EUROPÄISCHE PATENTSCHRIFT**

(45) Veröffentlichungstag und Bekanntmachung des Hinweises auf die Patenterteilung:
**21.05.2025 Patentblatt 2025/21**

(21) Anmeldenummer: **19740380.1**

(22) Anmeldetag: **17.07.2019**

(51) Internationale Patentklassifikation (IPC):
*C08G 18/18* (2006.01)    *C08G 18/76* (2006.01)
*C08G 18/48* (2006.01)    *C08G 18/66* (2006.01)
*C08G 18/32* (2006.01)    *C08J 9/08* (2006.01)
*C08G 101/00* (2006.01)

(52) Gemeinsame Patentklassifikation (CPC):
C08G 18/1816; C08G 18/1825; C08G 18/1833; C08G 18/3206; C08G 18/3275; C08G 18/4812; C08G 18/4816; C08G 18/485; C08G 18/4854; C08G 18/6677; C08G 18/6688; C08G 18/7664; C08J 9/08; C08G 2110/0058; C08G 2110/0083

(86) Internationale Anmeldenummer:
**PCT/EP2019/069181**

(87) Internationale Veröffentlichungsnummer:
**WO 2020/020709 (30.01.2020 Gazette 2020/05)**

(54) **SILIKONFREIE SCHAUMSTABILISATOREN FÜR DIE HERSTELLUNG VON POLYURETHANSCHAUMSTOFFEN**

SILICON-FREE FOAM STABILISERS FOR PRODUCING POLYURETHANE FOAMS

STABILISATEURS DE MOUSSE SANS SILICONE DESTINÉS À LA FABRICATION DE MOUSSES DE POLYURÉTHANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.07.2018 EP 18185412**

(43) Veröffentlichungstag der Anmeldung:
**02.06.2021 Patentblatt 2021/22**

(73) Patentinhaber: **BASF SE**
**67056 Ludwigshafen am Rhein (DE)**

(72) Erfinder:
• **TOMOVIC, Zeljko**
  **49448 Lemfoerde (DE)**
• **KRONIG, Sabrina**
  **49448 Lemfoerde (DE)**
• **MOELLER, Klaus**
  **67056 Ludwigshafen (DE)**
• **HAGEN, Christian**
  **49448 Lemfoerde (DE)**
• **SUSOFF, Markus**
  **34131 Kassel (DE)**

(74) Vertreter: **BASF IP Association**
**BASF SE**
**GBI - Z078**
**67056 Ludwigshafen (DE)**

(56) Entgegenhaltungen:
WO-A1-98/33833    WO-A2-2012/119970
DE-T2- 69 418 899    US-A1- 2013 178 548

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Herstellung von Polyurethanschaumstoffen, bei dem man (a) Polyisocyanat, (b) polymeren Verbindungen mit gegenüber Isocyanaten reaktiven Gruppen, (c) nicht silikonhaltigen Stabilisator, (d) gegebenenfalls Kettenverlängerungs- und oder Vernetzungsmittel, (e) Katalysatoren, (f) Treibmittel und (g) gegebenenfalls Hilfsmittel und Zusatzstoffe zu einer Reaktionsmischung vermischt und die Reaktionsmischung zum Polyurethan ausreagieren lässt, wobei der nicht silikonhaltige Stabilisator (c) erhältlich ist durch Alkoxylierung eines 1 bis 8-funktionellen Startermoleküls mit Alkylenoxiden, wobei 0 bis 9 Gew.-% der eingesetzten Alkylenoxyde Ethylenoxid ist, 0 bis 50 Gew.-% der eingesetzten Alkylenoxide 1,2 Propylenoxid und mindestens 50 Gew.-% der eingesetzten Alkylenoxide mindestens 4 Kohlenstoffatomen aufweisen und das zahlenmittlere Molekulargewicht des nicht silikonhaltigen Stabilisators (c) 500 bis 20.000 g/mol beträgt, der Anteil des nicht silikonhaltigen Schaumstabilisators (c), bezogen auf das Gesamtgewicht der Verbindungen (b), (c), (d), (e) und (f) 0,01 bis 10 Gew.-% beträgt und wobei der Gehalt an silikonbasiertem Schaumstabilisator kleiner als 0,3 Gew.-%, bezogen auf das Gesamtgewicht der Verbindungen (b), (c), (d), (e) und (f), ist. Weiter betrifft die vorliegende Erfindung eine Polyolkomponente, enthaltend den silikonfreien Stabilisator (c), einen Polyurethanschaumstoff, erhältlich nach einem erfindungsgemäßen Verfahren und die Verwendung des erfindungsgemäßen Polyurethanschaumstoffs in geschlossenen Räumen oder im Innern von Fahrzeugen.

Bei der Herstellung von Polyurethanschaumstoffen werden üblicherweise flüssige Polyisocyanate mit ebenfalls flüssigen Verbindungen mit gegenüber Isocyanaten reaktiven höhermolekularen Gruppen und Treibmitteln vermischt und zum Polyurethanschaumstoff umgesetzt. Als Treibmittel können dabei chemische Treibmittel, die mit Isocyanatgruppen unter Kohlendioxidbildung reagieren, und/oder physikalische Treibmittel, die durch die bei Herstellung der Polyurethane freiwerdende Wärme verdampfen, verwendet werden. Dabei laufen die Polyurethanbildungsreaktion und die Treibreaktion im Wesentlichen parallel ab. Um die Bildung eines stabilen Schaumstoffs zu gewährleisten, werden üblicherweise Schaumstabilisatoren verwendet. Diese Verbindungen gewährleisten, dass das während der Polyurethanreaktion entstehende Gas nicht aus der Reaktionsmischung entweicht und der entstehende Schaum solange stabil bleibt, bis die Polyurethanreaktion soweit abgeschlossen ist, so dass der erhaltene Schaumstoff nicht mehr kollabieren kann.

Üblicherweise eingesetzte Schaumstabilisatoren sind Polysiloxan-Polyoxyalkylen-Copolymere bzw. Polyethersiloxane. Solche siloxanbasierten Schaumstabilisatoren sind beispielsweise beschrieben im "Kunststoffhandbuch, Band 7, Polyurethane", Carl Hanser Verlag, 3. Auflage 1993, Kapitel 3.4.4.2. Diese Silikonstabilisatoren sind üblicherweise recht teuer, in vielen Fällen stellen sie die teuerste Komponente bei der Herstellung des Polyurethanschaumstoffs dar. Es existieren daher Versuche, die Silikonbasierten Schaumstabilisatoren durch andere, gleichwirkende Substanzen zu ersetzen.

So beschreibt WO 2016095128 isocyanatgruppenhaltige, perfluorbasierte, oberflächenaktive Substanzen für die Herstellung von Polyurethanschaumstoffen.

Weiter beschreibt WO 95/16721 nicht silikonbasierte Polyethervervindungen als Schaumstabilisatoren bei der Herstellung von Polyurethanschaumstoffen. Diese werden insbesondere bei der Herstellung von Polyurethanhartschaumstoffen eingesetzt und bestehen aus einem Polyether, der, bezogen auf den Gewichtsanteil an Oxyalkyleneinheiten im Polyether, 10 bis 90 Gew.-% Oxyethyleneinheiten und 90 bis 10 Gew.-% Oxyalkyleneinheiten mit mindestens 4 Kohlenstoffatomen enthält und der im wesentlichen frei von Oxypropyleneinheiten ist. Nachteilig an diesen Schaumstabilisatoren ist insbesondere deren schlechte Einsetzbarkeit bei der Herstellung von Polyurethanweichschaumstoffen.

US 2013/178548 beziehen sich auf viskoelastische Polyurethanschäume mit hoher Luftdurchlässigkeit. Als Reaktionssystem zur Herstellung des viskoelastischen Polyurethanschaums wird eine spezielle Isocyanatreaktive Komponente eingesetzt, die (i) von 35 bis 74 Gew.-% propylenoxidreiche Polyole, (ii) von 24 bis 50 Gew.-% ethylenoxidreiche Polyole und (iii) 2 bis 10 Gew.-% Butylenoxidreiche Polyole enthält.

Aufgabe der vorliegenden Erfindung war es daher, ein Verfahren zur Herstellung von Polyurethanschaumstoffen zu entwickeln, das ohne Einsatz von üblichen, silikonbasierten Schaumstabilisatoren zu einem feinzelligen Polyurethanschaumstoff, insbesondere Polyurethanweichschaumstoff, führt.

Diese Aufgabe wurde gelöst durch ein Verfahren zur Herstellung von Polyurethanschaumstoffen, bei dem man (a) Polyisocyanat, (b) polymeren Verbindungen mit gegenüber Isocyanaten reaktiven Gruppen, (c) nicht silikonhaltigen Stabilisator, (d) gegebenenfalls Kettenverlängerungs- und oder Vernetzungsmittel, (e) Katalysatoren, (f) Treibmittel und (g) gegebenenfalls Hilfsmittel und Zusatzstoffe zu einer Reaktionsmischung vermischt und die Reaktionsmischung zum Polyurethan ausreagieren lässt, wobei der nicht silikonhaltigen Stabilisator (c) erhältlich ist durch Alkoxylierung eines 1 bis 8-funktionellen Startermoleküls mit Alkylenoxiden, wobei 0 bis 9 Gew.-% der eingesetzten Alkylenoxyde Ethylenoxid ist, 0 bis 50 Gew.-% der eingesetzten Alkylenoxide 1,2 Propylenoxid und mindestens 50 Gew.-% der eingesetzten Alkylenoxide mindestens 4 Kohlenstoffatomen aufweisen und das zahlenmittlere Molekulargewicht des nicht silikonhaltigen Stabilisators (c) 500 bis 20.000 g/mol beträgt, der Anteil des nicht silikonhaltigen Schaumstabilisators (c), bezogen auf das Gesamtgewicht der Verbindungen (b), (c), (d), (e) und (f) 0,01 bis 10 Gew.-% beträgt und wobei der Gehalt an silikonbasiertem Schaumstabilisator kleiner als 0,3 Gew.-%, bezogen auf das Gesamtgewicht der Verbindungen (b), (c), (d), (e) und (f), ist.

Polyurethanschaumstoffe im Sinn der Erfindung umfasst alle bekannten, geschäumten Polyisocyanat-Polyadditionsprodukte. Diese umfassen Additionsprodukte aus Isocyanat und Alkohol sowie modifizierte Polyurethane, die Isocyanurat-, Allophanat-, Harnstoff-, Carbodiimid-, Uretonimin-, Biuretstrukturen und weitere Isocyanataddditionspro-dukte enthalten können. Diese erfindungsgemäßen Polyurethanschaumstoffe umfassen insbesondere Weichschaumstoffe, Halbhartschaumstoffe, Hartschaumstoffe oder Integralschaumstoffe auf Basis von Polyurethanen. Weiter sind unter Polyurethanschaumstoffen im Sinn der Erfindung auch geschäumte Polymerblends, enthaltend Polyurethane und weitere Polymere, zu verstehen. Vorzugsweise sind die erfindungsgemäßen Polyurethanschaumstoffe solche, die, abgesehen von den im Folgenden erläuterten Polyurethanbausteinen (a) bis (g) und deren Reaktionsprodukte, keine weiteren Polymere enthalten.

Im Rahmen der Erfindung werden unter Polyurethan-Schaumstoffen Schaumstoffe gemäß DIN 7726 verstanden. Dabei weisen erfindungsgemäße Polyurethan-Weichschaumstoffe eine Druckspannung bei 10 % Stauchung bzw. Druckfestigkeit nach DIN 53 421 / DIN EN ISO 604 von 15 kPa und kleiner, vorzugsweise 1 bis 14 kPa und insbesondere 4 bis 14 kPa und eine Dichte von vorzugsweise 10 bis 100 g/L auf. Erfindungsgemäße Polyurethan-Halbhartschaumstoffe weisen eine Druckspannung bei 10 % Stauchung nach DIN 53 421 / DIN EN ISO 604 von größer 15 bis kleiner 80 kPa auf. Erfindungsgemäße Polyurethan-Halbhartschaumstoffe und Polyurethan-Weichschaumstoffe verfügen nach DIN ISO 4590 über eine Offenzelligkeit von vorzugsweise größer 85 %, besonders bevorzugt größer 90 %. Weitere Details zu erfindungsgemäßen Polyurethan-Weichschaumstoffen und Polyurethan-Halbhartschaumstoffen finden sich im "Kunststoffhandbuch, Band 7, Polyurethane", Carl Hanser Verlag, 3. Auflage 1993, Kapitel 5.

Die erfindungsgemäßen Polyurethan-Hartschaumstoffe weisen eine Druckspannung bei 10 % Stauchung von größer gleich 80 kPa, bevorzugt größer gleich 120 kPa, besonders bevorzugt größer gleich 150 kPa auf. Weiterhin verfügt der Polyurethan-Hartschaumstoff nach DIN ISO 4590 über eine Geschlossenzelligkeit von größer 80%, bevorzugt größer 90 %. Weitere Details zu erfindungsgemäßen Polyurethan-Hartschaumstoffen finden sich im "Kunststoffhandbuch, Band 7, Polyurethane", Carl Hanser Verlag, 3. Auflage 1993, Kapitel 6.

Unter elastomeren Polyurethan-Schaumstoffen sind im Rahmen dieser Erfindung Polyurethan-Schaumstoffe nach DIN 7726 zu verstehen, die nach kurzzeitiger Verformung um 50 % der Dicke nach DIN 53 577 nach 10 Minuten keine bleibende Verformung über 2 % ihrer Ausgangsdicke aufweisen. Dabei kann es sich um einen Polyurethan-Hartschaumstoff, einen Polyurethan-Halbhartschaumstoff oder einen Polyurethan-Weichschaumstoff handeln.

Bei Polyurethan-Integralschaumstoffen handelt es sich um Polyurethan-Schaumstoffe nach DIN 7726 mit einer Randzone, die bedingt durch den Formgebungsprozess eine höhere Dichte als der Kern aufweisen. Die über den Kern und die Randzone gemittelte Gesamtrohdichte liegt dabei vorzugsweise über 100 g/L. Auch bei Polyurethan-Integralschaumstoffen im Sinn der Erfindung kann es sich um Polyurethan-Hartschaumstoffe, Polyurethan-Halbhartschaumstoffe oder Polyurethan-Weichschaumstoffe handeln. Weitere Details zu erfindungsgemäßen Polyurethan-Integralschaumstoffen finden sich im "Kunststoffhandbuch, Band 7, Polyurethane", Carl Hanser Verlag, 3. Auflage 1993, Kapitel 7.

Dabei werden erfindungsgemäße Polyurethane erhalten indem man Polyisocyanate (a) mit polymeren Verbindungen mit gegenüber Isocyanaten reaktiven Gruppen (b), nicht silikonhaltigen Stabilisator (c), gegebenenfalls Kettenverlängerungs- und oder Vernetzungsmittel (d), Katalysatoren (e), Treibmittel (f) und gegebenenfalls Hilfsmittel und Zusatzstoffe (g) zu einer Reaktionsmischung vermischt und die Reaktionsmischung zum Polyurethan ausreagieren lässt.

Dabei ist der erfindungsgemäße Polyurethanschaumstoff in einer bevorzugten Ausführungsform ein Polyurethanschaumstoff mit einer mittleren Dichte von 10 bis 850 g/L, vorzugsweise ein Polyurethanhalbhartschaumstoff oder ein Polyurethanweichschaumstoff oder ein Polyurethanhartschaumstoff, besonders bevorzugt ein elastomerer Polyurethanweichschaumstoff ein Polyurethanhalbhartschaumstoff oder ein elastomerer Polyurethanintegralschaumstoff. Der elastomere Polyurethanintegralschaumstoff weist vorzugsweise eine über den Kern und die Randzone gemittelte Dichte von 150 bis 500 g/L auf. Der Polyurethanweichschaumstoff weist vorzugsweise eine mittlere Dichte von 10 bis 100 g/L auf, der Polyurethanhalbhartschaumstoff weist vorzugsweise eine mittlere Dichte von 70 bis 150 g/L auf und der Polyurethanhartschaumstoff weist vorzugsweise eine mittlere Dichte von 30 bis 120 g/L auf.

Dabei wird das erfindungsgemäße Polyurethan vorzugsweise in Innenräumen, beispielsweise Innenräumen von Gebäuden oder Transportmitteln, besonders bevorzugt im Innenraum von Transportmitteln, wie Schiffen, Flugzeugen, LKW's, PKW's oder Bussen, mehr bevorzugt PKW's oder Bussen und insbesondere PKW's eingesetzt. Dabei wird der Innenraum von PKW's und Bussen im Folgenden als Automobilinnenraumteil bezeichnet. Ein Polyurethanweichschaumstoff kann dabei im Möbelbau, beispielsweise als Sitzpolster, als Matratzen oder als Teppichhinterschäumung eingesetzt werden, ein Polyurethanhalbhartschaumstoff als Hinterschäumung von Tür-Seitenelementen oder Instrumententafeln, ein Polyurethanintegralschaumstoff als Lenkrad, Schaltknopf oder Kopfstütze und ein Polyurethanhartschaumstoff als Dachhimmel.

Die zur Herstellung der erfindungsgemäßen Polyurethane verwendeten Polyisocyanatkomponenten (a) umfassen alle zur Herstellung von Polyurethanen bekannten Polyisocyanate. Diese umfassen die aus dem Stand der Technik bekannten aliphatischen, cycloaliphatischen und aromatischen zwei- oder mehrwertigen Isocyanate sowie beliebige Mischungen daraus. Beispiele sind 2,2 ' -, 2,4 ' - und 4,4 ' -Diphenylmethandiisocyanat, die Mischungen aus monomeren Diphenylmethandiisocyanaten und höherkernigen Homologen des Diphenylmethandiisocyanats (Polymer-MDI), Isophorondiisocyanat (IPDI) oder dessen Oligomere, 2,4- oder 2,6-Toluylendiisocyanat (TDI) oder deren Mischungen, Tetramethylendiisocyanat oder dessen Oligomere, Hexamethylendiisocyanat (HDI) oder dessen Oligomere, Naphtylendiisocyanat (NDI) oder Mischungen daraus.

Bevorzugt werden 2,4- und/oder 2,6-Tolylendiisocynat (TDI) oder deren Mischungen, monomere Diphenylmethandiisocyanate und/oder höherkernige Homologe des Diphenylmethandiisocyanats (Polymer-MDI) und deren Mischungen verwendet. Weitere mögliche Isocyanate sind beispielsweise im "Kunststoffhandbuch, Band 7, Polyurethane", Carl Hanser Verlag, 3. Auflage 1993, Kapitel 3.2 und 3.3.2 angegeben.

Die Polyisocyanatkomponente (a) kann in Form von Polyisocyanatprepolymeren eingesetzt werden. Diese Polyisocyanatprepolymere sind erhältlich, indem vorstehend beschriebene Polyisocyanate (Bestandteil (a-1)) im Überschuss, beispielsweise bei Temperaturen von 20 bis 100 ° C, bevorzugt bei etwa 80 ° C, mit Polymeren Verbindungen mit gegenüber Isocyanaten reaktiven Gruppen (b) (Bestandteil (a-2)) und/oder Kettenverlängerern (d) (Bestandteil (a-3)) zum Isocyanatprepolymer umgesetzt werden.

Polymere Verbindungen mit gegenüber Isocyanaten reaktiven Gruppen (a-2) und Kettenverlängerungsmittel (a3) sind dem Fachmann bekannt und beispielsweise beschrieben im "Kunststoffhandbuch, 7, Polyurethane", Carl Hanser-Verlag, 3. Auflage 1993, Kapitel 3.1. So können beispielsweise als Polymere Verbindungen mit gegenüber Isocyanaten reaktiven Gruppen (a-2) auch die nachfolgend unter (b) beschriebenen Polymere Verbindungen mit gegenüber Isocyanaten reaktiven Gruppen eingesetzt werden.

Als polymere Verbindungen mit gegenüber Isocyanaten reaktiven Gruppen (b) können alle bekannten Verbindungen mit mindestens zwei gegenüber Isocyanaten reaktiven Wasserstoffatomen eingesetzt werden, beispielsweise solche mit einer Funktionalität von 2 bis 8 und einem zahlenmittleren Molekulargewicht von 400 bis 20.000 g/mol. So können beispielsweise Verbindungen, ausgewählt aus der Gruppe der Polyetherpolyole, Polyesterpolyole oder Mischungen daraus, verwendet werden.

Polyetherole werden beispielsweise hergestellt aus Epoxiden, wie Propylenoxid und/oder Ethylenoxid, oder aus Tetrahydrofuran mit wasserstoffaktiven Starterverbindungen, wie aliphatischen Alkoholen, Phenolen, Aminen, Carbonsäuren, Wasser oder Verbindungen auf Naturstoffbasis, wie Saccharose, Sorbit oder Mannit, unter Verwendung eines Katalysators. Zu nennen sind hier basische Katalysatoren oder Doppelmetallcyanidkatalysatoren, wie beispielweise in PCT/EP2005/010124, EP 90444 oder WO 05/090440 beschrieben. Dabei wird das zahlenmittlere Molekulargewicht M der Polyetherole ausgehend von der Formel

$$M = \frac{F \cdot 56100}{OHZ}$$

bestimmt, wobei F für die Funktionalität des Startermoleküls, bei Mischungen von Startermolekülen für die zahlengemittelte Funktionalität der Startermoleküle und OHZ für die durch Titration bestimmte Hydroxylzahl steht.

Polyesterole werden z.B. hergestellt aus aliphatischen oder aromatischen Dicarbonsäuren und mehrwertigen Alkoholen, Polythioetherpolyolen, Polyesteramiden, hydroxylgruppenhaltigen Polyacetalen und/oder hydroxylgruppenhaltigen aliphatischen Polycarbonaten, vorzugsweise in Gegenwart eines Veresterungskatalysators. Weitere mögliche Polyole sind beispielsweise im "Kunststoffhandbuch, Band 7, Polyurethane", Carl Hanser Verlag, 3. Auflage 1993, Kapitel 3.1 angegeben.

Neben den beschriebenen Polyetherolen und Polyesterolen können auch füllstoffhaltige Polyetherole oder Polyesterole, auch als Polymerpolyetherole oder Polymerpolyesterole bezeichnet, eingesetzt werden. Solche Verbindungen enthalten vorzugsweise dispergierte Partikel aus thermoplastischen Kunststoffen, beispielsweise aufgebaut aus olefinischen Monomeren, wie Acrylnitril, Styrol, (Meth)Acrylaten, (Meth)Acrylsäure und/oder Acrylamid. Solche Füllstoffhaltigen Polyole sind bekannt und kommerziell erhältlich. Ihre Herstellung ist beispielweise beschrieben in DE 111 394, US 3 304 273, US 3 383 351, US 3 523 093, DE 1 152 536, DE 1 152 537 WO 2008/055952 und WO2009/128279.

In einer besonders bevorzugten Ausführungsform werden als polymere Verbindungen mit gegenüber Isocyanat reaktiven Gruppen (b) Polyetherole (b1) eingesetzt, erhältlich durch Anlagerung von Ethylenoxid, 1,2-Propylenoxid oder Mischungen davon, an ein Startermolekül. Besonders bevorzugt weisen diese Polyetherole eine mittlere Funktionalität von 1,8 bis 3 und eine OH-Zahl von 20 bis 120, besonders bevorzugt 25 bis 100 und insbesondere 30 bis 80 mg KOH/g auf. Vorzugsweise beträgt der Anteil von Propylenoxid und Ethylenoxid, bezogen auf das Gesamtgewicht der zur Herstellung des Polyetharalkohols (b1) eingesetzten Alkylenoxide, mindestens 80 Gew.-%, besonders bevorzugt mindestens 90 Gew.-%, mehr bevorzugt insbesondere 95 Gew.-% und insbesondere 100 Gew.-%.

Der nicht silikonhaltigen Stabilisator (c) ist erhältlich durch Alkoxylierung eines 1 bis 8-funktionellen Startermoleküls mit Alkylenoxiden, wobei 0 bis 9 Gew.-% der eingesetzten Alkylenoxyde Ethylenoxid ist, 0 bis 50 Gew.-% der eingesetzten Alkylenoxide 1,2 Propylenoxid und mindestens 50 Gew.-% der eingesetzten Alkylenoxide mindestens 4 Kohlenstoffatomen aufweisen und das zahlenmittlere Molekulargewicht des nicht silikonhaltigen Stabilisators (c) 500 bis 20.000 g/mol, vorzugsweise 1.000 bis 15.000 g/mol, besonders bevorzugt 1.500 bis 8.000 g/mol, weiter bevorzugt 1.800 bis 7.000 g/mol und insbesondere 2.000 bis 5.000 g/mol und noch mehr bevorzugt 2.500 bis 4.500 g/mol beträgt.

Als Startermoleküle zur Herstellung des nicht silikonhaltigen Schaumstabilisators (c) können alle bekannten Startermoleküle mit einer Funktionalität von 1 bis 8 eingesetzt werden. Diese umfassen die oben genannten Startermoleküle zur Herstellung der Polyetherolen. Solche Startermoleküle sind beispielsweise Methanol, Ethanol, Propanol, Butanol, Pentanol, Hexanol, Heptanol, Octanol, Nonanol, Decanol, Wasser, Ethylenglycol, Diethylenglycol, Propylenglykol, Dipropylenglykol, Glycerin, Trimethylolpropan, Pentaerythrit, Zuckerderivate, wie Saccharose, Hexitderivate, wie Sorbitol, Methylamin, Ethylamin, Isopropylamin, Butylamin, Benzylamin, Anilin, Toluidin, Toluoldiamin, Naphtylamin, Ethylendiamin, Diethylentriamin, 4,4 ' -Methylendianilin, 1,3,-Propandiamin, 1,6-Hexandiamin, Ethanolamin, Diethanolamin, Triethanolamin sowie andere ein, zwei oder mehrwertige Alkohole oder ein oder mehrwertige Amine oder Mischungen daraus. Ebenfalls als Startermoleküle können Polyetherpolyole, beispielsweise Polyalkylenoxide, wie Polyethylenoxid oder Polypropylenoxid eingesetzt werden. Werden Polyalkylenoxide als Startermoleküle eingesetzt, weisen diese vorzugsweise eine Funktionalität von 2 bis 6 und ein zahlenmittleres Molekulargewicht von 200 bis 5000, besonders bevorzugt 300 bis 3000, weiter bevorzugt 500 bis 2000 und insbesondere 500 bis 1000 g/mol auf. Weiter können als Startermoleküle auch Verbindungen eingesetzt werden, die Gruppen enthalten, welche die Polyurethanreaktion beschleunigen. Beispiele für solche Startermoleküle sind 3-(Dimethylamino)-1-propylamin und 3-(Pyrrolidin-1-yl)propan-1-amin. Vorzugsweise beträgt die mittlere Funktionalität, bevorzugt die mittlere Hydroxyfunktionalität, der Startermoleküle zur Herstellung der nicht silikonhaltigen Stabilisator (c) 1 bis 6, mehr bevorzugt 1 bis 4, weiter bevorzugt 1 bis 3 besonders bevorzugt 1,5 bis 2,5 und insbesondere 2. Bevorzugte Startermoleküle sind Methanol, Ethanol, Propanol, Butanol, Wasser, Ethylenglycol, Diethylenglycol, Propylenglykol, Dipropylenglykol, und besonders bevorzugt Wasser oder Dipropylenglykol.

Als Alkylenoxide zur Herstellung des nicht silikonhaltigen Schaumstabilisators werden mindestens 50 Gew.-% Alkylenoxide mindestens 4 Kohlenstoffatomen eingesetzt, beispielsweise mit 4 bis 20, bevorzugt 4 bis 12 und insbesondere 4 bis 10 Kohlenstoffatomen, wie Epoxybutan, Epoxypentan, Epoxyhexan, Epoxyheptan, Epoxyoctan, Epoxynonan oder Epoxydecan. Weiter bevorzugt werden die 1,2-Epoxide dieser Verbindungen eingesetzt. Besonders bevorzugt enthält das Alkylenoxide mindestens 4 Kohlenstoffatomen 1,2-Epoxybutan und/oder 1,2 Epoxypentan, insbesondere 1,2-Epoxybutan. In einer besonders bevorzugten Ausführungsform besteht das Alkylenoxid mit mindestens 4 Kohlenstoffatomen aus 1,2-Epoxybutan, 1,2-Epoxypentan oder Mischungen davon, insbesondere aus 1,2-Epoxybutan. Vorzugsweise beträgt der Anteil der Alkylenoxide mit mindestens 4 Kohlenstoffen bei der Herstellung der Komponente (c) mindestens 70 Gew.-%, besonders bevorzugt mindestens 90 Gew.-%, mehr bevorzugt mindestens 95 Gew.-% und insbesondere 100 Gew.-%, jeweils bezogen auf das Gesamtgewicht der zur Herstellung des nicht silikonhaltigen Schaumstabilisators (c) eingesetzten Alkylenoxide.

Weiter enthalten die Alkylenoxide zur Herstellung des nicht silikonhaltigen Schaumstabilisators (c) weniger als 9 Gew.-%, bevorzugt weniger als 5 Gew.-%, mehr bevorzugt weniger als 2 Gew.-% und insbesondere kein Ethylenoxid. Ist Propylenoxid, vorzugsweise 1,2-Propylenoxid, enthalten, beträgt der Anteil an Propylenoxid weniger als 50 Gew.-%, bevorzugt 5 bis 40 Gew.-%, und besonders bevorzugt 10 bis 30 Gew.-%, jeweils bezogen auf das Gesamtgewicht des zur Herstellung des nicht silikonhaltigen Schaumstabilisators (c) eingesetzten Alkylenoxids. In einer weiteren, ebenfalls bevorzugten Ausführungsform wird zur Herstellung der Verbindung (c) kein Propylenoxid eingesetzt. Die Alkylenoxide können dabei statistisch oder blockweise entlang der Kette angeordnet sein, beispielsweise ist es möglich, dass an das Startermolekül zuerst ein Block aus Butylenoxid und anschließend Propylenoxid oder zuerst Propylenoxid und dann Butylenoxid oder eine Mischung aus Propylenoxid und Butylenoxid angelagert wird. Als Katalysatoren können übliche Katalysatoren für die Polyalkoxylierung eingesetzt werden. Zu nennen sind hier basische Katalysatoren oder Doppel-metallcyanidkatalysatoren, wie beispielsweise in PCT/EP2005/010124, EP 90444 oder WO 05/090440 beschrieben.

Nach der Alkoxylierung können alle oder ein Teil der erhaltenen OH-Gruppen des nicht silikonhaltigen Stabilisators (c) "verkappt" werden. Gemeint sind hier Umsetzungen der Polyol-Hydroxygruppen beispielsweise a) zu Urethanen z. B. mit Isocyanaten, b) zu Estern z. B. mit Anhydriden, Säurechloriden o. ä., c) zu Ethern z. B. mit Alkylierungsmitteln oder Sulfonsäurederivaten sowie d) zu Silylethern z. B. mit Silanen oder Silylhalogeniden. Dadurch verringert sich die Funktionalität gegenüber Isocyanaten und kann im Fall der vollständigen Umsetzung aller OH-Gruppen auch zu gegenüber Isocyanat nicht reaktiven Stabilisatoren (c) führen. Vorzugsweise weisen die nicht Silikonhaltigen Schaumstabilisatoren (c) 1 bis 8, besonders bevorzugt 1,5 bis 4 und insbesondere 1,8 bis 2,5 gegenüber Isocyanat reaktive Gruppen, insbesondere Hydroxylgruppen auf. Wenn die Komponente (c) gegenüber Isocyanat reaktive Gruppen aufweist ist sie Teil der Verbindungen mit gegenüber Isocyanat reaktiven Gruppen (b). Weist die Verbindung (c) gegenüber Isocyanaten reaktive Gruppen auf, werden neben den nicht silikonhaltigen Schaumstabilisatoren (c) mit gegenüber Isocyanat reaktiven Gruppen vorzugsweise weitere Verbindungen mit gegenüber Isocyanat reaktiven Gruppen eingesetzt, besonders bevorzugt Polyehterole und insbesondere Polyetherole (b1).

Der Anteil des nicht silikonhaltigen Schaumstabilisators (c), bezogen auf das Gesamtgewicht der Verbindungen (b), (c), (d), (e) und (f) beträgt 0,01 bis 10 Gew.-%, bevorzugt 0,05 bis 5 Gew.-%, weiter bevorzugt 0,05 bis 3 Gew.-%,

besonders bevorzugt 0,1 bis 2, Gew.-%, noch mehr bevorzugt 0,1 bis 1,5 Gew.-%, noch mehr bevorzugt 0,1 bis 1 Gew.-% und insbesondere 0,1 bis 0,5 Gew.-%, dabei können auch Mischungen unterschiedlicher nicht silikonhaltiger Schaumstabilisatoren eingesetzt werden.

Als Kettenverlängerer und Vernetzungsmittel (d) können Verbindungen mit mindestens zwei gegenüber Isocyanaten reaktiven Gruppen eingesetzt werden, die ein Molekulargewicht von weniger als 400 g/mol aufweisen, wobei Moleküle mit zwei gegenüber Isocyanat reaktiven Wasserstoffatomen als Kettenverlängerer und Moleküle mit mehr als zwei gegenüber Isocyanat reaktiven Wasserstoffen als Vernetzer bezeichnet werden. Dabei kann jedoch auch auf das Kettenverlängerungs- oder Vernetzungsmittel verzichtet werden. Zur Modifizierung der mechanischen Eigenschaften, z.B. der Härte, kann sich allerdings der Zusatz von Kettenverlängerungsmitteln, Vernetzungsmitteln oder gegebenenfalls auch Gemischen davon als vorteilhaft erweisen.

Werden Kettenverlängerungsmittel und/oder Vernetzungsmittel (d) eingesetzt, können die bei der Herstellung von Polyurethanen bekannten Kettenverlängerer und/oder Vernetzer eingesetzt werden. Dies sind vorzugsweise niedermolekulare Verbindungen mit gegenüber Isocyanaten reaktiven funktionellen Gruppen, beispielsweise Glycerin, Trimethylolpropan, Glycol und Diamine. Weitere mögliche niedermolekulare Kettenverlängerungsmittel und/oder Vernetzungsmittel sind beispielsweise im "Kunststoffhandbuch, Band 7, Polyurethane", Carl Hanser Verlag, 3. Auflage 1993, Kapitel 3.2 und 3.3.2 angegeben.

Katalysatoren (e) beschleunigen die Reaktion der Polyole (b) und gegebenenfalls Kettenverlängerungs- und Vernetzungsmittel (d) sowie chemischem Treibmittel (f) mit den organischen, gegebenenfalls modifizierten Polyisocyanaten (a) stark. Dabei enthalten die Katalysatoren (e) vorzugsweise einbaubare Aminkatalysatoren, beispielsweise wenn die Emissionen an organischen Verbindungen möglichst gering sein sollen. Diese weisen mindestens eine, vorzugsweise 1 bis 8 und besonders bevorzugt 1 bis 2 gegenüber Isocyanaten reaktive Gruppen, wie primäre Amingruppen, sekundäre Amingruppen, Hydroxylgruppen, Amide oder Harnstoffgruppen, vorzugsweise primäre Amingruppen, sekundäre Amingruppen, Hydroxylgruppen, auf. Einbaubare Aminkatalysatoren werden meist zur Herstellung emissionsarmer Polyurethane eingesetzt, die insbesondere im Automobilinnenbereich eingesetzt werden. Solche Katalysatoren sind bekannt und beispielsweise in EP1888664 beschrieben. Diese umfassen Verbindungen, die neben der bzw. den gegenüber Isocyanaten reaktiven Gruppen vorzugsweise eine oder mehrere tertiäte Aminogruppen aufweisen. Vorzugsweise trägt mindestens eine der tertiären Aminogruppen der einbaubaren Katalysatoren mindestens zwei aliphatische Kohlenwasserstoffreste, vorzugsweise mit 1 bis 10 Kohlenstoffatomen je Rest, besonders bevorzugt mit 1 bis 6 Kohlenstoffatomen je Rest. Besonders bevorzugt tragen die tertiären Aminogruppen zwei Reste, unabhängig voneinander ausgewählt aus Methyl- und Ethylrest sowie einen weiteren organischen Rest wie z. B. den Pyrrolidinylrest. Beispiele für einsetzbare einbaubare Katalysatoren sind beispielsweise Bisdimethylaminopropylharnstoff, Bis(N,N-Dimethylaminoethoxyethyl)carbamat, Dimethylaminopropylharnstoff, N,N,N-Trimethyl-N-hydroxyethylbis(aminopropylether), N,N,N-Trimethyl-N-hyd-roxyethylbis(aminoethylether), Diethylethanolamin, Bis(N,N-dimethyl-3-aminopropyl)amin, Dimethylaminopropylamin, 3-(Pyrrolidin-1-yl)propan-1-amin, 3-Dimethyaminopropyl-N,N-dimethylpropan-1,3-diamin, Dimethyl-2-(2-aminoethoxyethanol) und (1,3-Bis(dimethyla-mino)-propan-2-ol), N,N-Bis-(3-dimethylamino-propyl)-N-isopropanolamin, Bis-(dimethylaminopropyl)-2-hydroxyethyl-amin, N,N,N-Trimethyl-N-(3 aminopropyl)-bis(aminoethyl-ether), 3-Dimethylaminoisopropyl-diisopropanolamin oder Mischungen davon.

Neben den einbaubaren Aminkatalysatoren können weiter übliche Katalysatoren zur Herstellung der Polyurethane eingesetzt werden. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt. In einer besonders bevorzugten Ausführungsform werden ausschließlich einbaubare Katalysatoren als Katalysatoren (e) eingesetzt.

Werden Katalysatoren (e) eingesetzt, können diese beispielsweise in einer Konzentration von 0,001 bis 5 Gew.-%, insbesondere 0,05 bis 2 Gew.-% als Katalysator bzw. Katalysatorkombination, bezogen auf das Gewicht der Komponente (b) eingesetzt werden.

Als Treibmittel (f) können alle zur Herstellung von Polyurethanen bekannten Treibmittel eingesetzt werden. Diese können chemische und/oder physikalische Treibmittel enthalten. Solche Treibmittel werden beispielsweise im "Kunststoffhandbuch, Band 7, Polyurethane", Carl Hanser Verlag, 3. Auflage 1993, Kapitel 3.4.5 beschrieben. Unter chemischen Treibmitteln werden dabei Verbindungen verstanden, die durch Reaktion mit Isocyanat gasförmige Produkte bilden. Beispiele für solche Treibmittel sind Wasser oder Carbonsäuren. Unter physikalischen Treibmitteln werden dabei Verbindungen verstanden, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe und andere Verbindungen, wie zum Beispiel perfluorierte Alkane, wie Perfluorhexan, Fluorchlorkohlenwasserstoffe, und Ether, Ester, Ketone, Acetale und/oder flüssiges Kohlendioxid. Dabei kann das Treibmittel in jeder beliebigen Menge eingesetzt werden. Vorzugsweise wird das Treibmittel in einer Menge eingesetzt, dass der resultierende Polyurethanschaumstoff eine Dichte von 10 bis 850 g/L, besonders bevorzugt 20 bis 800 g/L und insbesondere 25 bis 500 g/L aufweist. Besonders bevorzugt werden Treibmittel, enthaltend Wasser, und insbesondere Wasser als alleiniges Treibmittel eingesetzt.

Weiter können Hilfsmittel und/oder Zusatzstoffe (g) eingesetzt werden. Dabei können alle zur Herstellung von Polyurethanen bekannten Hilfs- und Zusatzstoffe verwendet werden. Genannt seien beispielsweise oberflächenaktive Substanzen, Zellregler, Trennmittel, Füllstoffe, Farbstoffe, Pigmente, Flammschutzmittel, Hydrolyseschutzmittel, fungistatische und bakteriostatisch wirkende Substanzen. Solche Substanzen sind bekannt und beispielsweise in "Kunststoffhandbuch, Band 7, Polyurethane", Carl Hanser Verlag, 3. Auflage 1993, Kapitel 3.4.4 und 3.4.6 bis 3.4.11 beschrieben. Weiter können auch bekannte silikonbasierte Schaumstabilisatoren eingesetzt werden. Als silikonbasierte Schaumstabilisatoren werden dabei silikonbasierte Verbindungen eingesetzt, die die Oberflächenspannung der Polyole (b) herabsetzen und bei denen mindestens zwei Siliziumatome jeweils durch Sauerstoffatome verbunden sind. Bei diesen Verbindungen handelt es sich vorzugsweise um Verbindungen, die eine amphiphile Struktur aufweisen, das heißt zwei Molekülteile mit unterschiedlicher Polarität aufweisen. Vorzugsweise weist der silikonbasierte Zellstabilisator einen Molekülteil mit Siliziumorganischen Bausteinen, wie Dimethylsiloxan oder Methylphenylsiloxan, und einen Molekülteil mit einer chemischen Struktur, die den Polyolen (b) ähnelt, auf. Vorzugsweise handelt es sich dabei um Polyoxyalkyleneinheiten. Besonders bevorzugt werden als silikonbasierten Schaumstabilisatoren Polysiloxan-Polyoxyalkylen-Blockcopolymere mit einem Oxyethylenanteil von kleiner 75 Gew.-% bezogen auf den gesamten Anteil Polyoxyalkyleneinheiten, eingesetzt. Vorzugsweise weisen diese Polyethylenoxyd- und/oder Polypropylenoxydeinheiten auf. Bevorzugt beträgt das Molekulargewicht der Polyoxyalkylen Seitenketten mindestens 1000 g/mol Seitenketten. Diese Verbindungen sind bekannt und beispielsweise beschrieben im "Kunststoffhandbuch, Band 7, Polyurethane", Carl Hanser Verlag, 3. Auflage 1993, Kapitel 3.4.4.2 und können beispielsweise hergestellt werden durch Umsetzung von Siloxan, beispielsweise Polydimethylsiloxan, mit Polyoxyalkylenen, insbesondere Polyethylenoxyd, Polypropylenoxyd oder Copolymeren aus Polyethylenoxyd und Polypropylenoxyd. Dabei können Polysiloxan-Polyoxyalkylen-Blockcopolymere erhalten werden, die die Oxyalkylenkette als Endgruppe oder als eine oder mehrere Seitenketten aufweisen. Die silikonbasierten Schaumstabilisatoren können OH-Gruppen aufweisen, vorzugsweise sind diese aber frei von OH-Gruppen. Dies kann erreicht werden, indem als Starter zur Herstellung der Polyoxyalkylene einwertige Alkohole, wie Butanol, eingesetzt werden. Beispielsweise können als silikonbasierte Zellstabilisatoren bekannte Schaumstabilisatoren auf Basis von Silikonen eingesetzt werden, wie Niax Silicone L1501, L 1505, L1540, L 1593, L 1602 oder L 1609 der Monentive; Dabco® DC 193, Dabco® DC 3041, Dabco® DC 3042, Dabco® DC 3043, Dabco® DC 5000, Dabco® DC 5169, Dabco® DC 2525, Dabco® DC 2584, Dabco® SI 1101, Dabco® SI 1103 oder Dabco® DC 5160 der Firma Air Products; Tegostab® BF 2270, Tegostab® BF 2370, Tegostab® BF 2470, Tegostab® B 8110, Tegostab® B 8225, Tegostab® B 8255, Tegostab® B 8317, Tegostab® B 8325, Tegostab® B 8905, Tegostab® B 8946 PF, Tegostab® B 8948, Tegostab® B 8950, Tegostab® B 8952, Tegostab® B 8960 Tegostab® B 8715 LF2, Tegostab® B 8734 LF2, Tegostab® B 8736 LF2, Tegostab® B 8761 LF2, Tegostab® B 8724 LF2, Tegostab® B 8738 LF2, Tegostab® B 8742 LF2, Tegostab® B 8747 LF2, Tegostab® B 8745 LF2, Tegostab® B 8749 LF2 oder Tegostab® B 8486 der Firma Goldschmidt. Dabei wird im Rahmen der vorliegenden Erfindung weniger als 0,3 Gew.-% Silikonbasierter Stabilisator, bezogen auf das Gesamtgewicht der Verbindungen (b), (c), (d), (e) und (f), eingesetzt. In einer bevorzugten Ausführungsform der Erfindung werden weniger als 0,2 Gew.-%, besonders bevorzugt weniger als 0,1 Gew.-%, mehr bevorzugt weniger als 0,01 Gew.-%, bezogen auf das Gesamtgewicht der Verbindungen (b), (c), (d), (e) und (f), und insbesondere kein silikonbasierter Schaumstabilisator eingesetzt.

Im Allgemeinen werden bei der Herstellung des erfindungsgemäßen Polyurethans die die Verbindungen (a) bis (g) in solchen Mengen zur Umsetzung gebracht, dass das ÄquivalenzVerhältnis von NCO-Gruppen der Polyisocyanate (a) zur Summe der reaktiven Wasserstoffatome der Komponenten (b), (c), (e) und (f) sowie gegebenenfalls (d) und (g), 0,60 bis 1,5:1, vorzugsweise 0,70 bis 1,25:1 und besonders bevorzugt 0,80 bis 1,10:1 beträgt. Falls die zelligen Kunststoffe zumindest teilweise Isocyanuratgruppen enthalten, wird üblicherweise ein Verhältnis von NCO-Gruppen der Polyisocyanate (a) zur Summe der reaktiven Wasserstoffatome der Komponente (b), (c), (e), (f) und gegebenenfalls (d) und (g) von 1,5 bis 20:1, vorzugsweise 1,5 bis 8:1 und besonders bevorzugt 1,50 bis 5:1 verwendet. Ein Verhältnis von 1:1 entspricht dabei einem Isocyanatindex von 100.

Die speziellen Ausgangssubstanzen (a) bis (g) für die Herstellung von erfindungsgemäßen Polyurethanen unterscheiden sich jeweils quantitativ und qualitativ nur geringfügig wenn als erfindungsgemäßes Polyurethan ein Weichschaumstoff, ein Halbhartschaumstoff, ein Hartschaumstoff oder ein Integralschaumstoff hergestellt werden soll. So lässt sich beispielsweise über die Funktionalität und die Kettenlänge der höhermolekularen Verbindung mit mindestens zwei reaktiven Wasserstoffatomen die Elastizität und Härte des erfindungsgemäßen Polyurethans variieren. Solche Modifikationen sind dem Fachmann bekannt.

Die Edukte für die Herstellung eines Weichschaums sind beispielsweise in PCT/EP2005/010124 und EP 1529792, die Edukte für die Herstellung eines Halbhartschaums im "Kunststoffhandbuch, Band 7, Polyurethane", Carl Hanser Verlag, 3. Auflage 1993, Kapitel 5.4, die Edukte für die Herstellung eines Hartschaumstoffs in PCT/EP2005/010955 und die Edukte für Herstellung eines Integralschaumstoffs in EP 364854, US 5506275 oder EP 897402 beschrieben. Zu den in diesen Dokumenten beschriebenen Edukten wird dann jeweils noch der nicht silikonhaltige Schaumstabilisator (c) zugegeben. Besonders bevorzugt sind die erfindungsgemäßen Polyurethanschaumstoffe Polyurethanweichschaumstoffe.

Häufig wird zur Herstellung der erfindungsgemäßen Polyurethanschaumstoffe das sogenannte "Zweikomponentenverfahren" eingesetzt. Dazu werden die gegenüber Isocyanat reaktiven Komponenten sowie häufig auch nicht reaktive Komponenten, beispielsweise aus der Gruppe der Hilfs- und Zusatzstoffe (g), zu einer Polyolkomponente vereinigt, die dann bei der Herstellung des Polyurethanschaumstoffs mit den Isocyanaten der Isocyanatkomponente vermischt wird. Dabei kann die Isocyanatkomponente neben den Isocyanaten (a) auch weitere Verbindungen enthalten. Gegenstand der Erfindung ist daher auch eine Polyolkomponente, enthaltend (b) polymeren Verbindungen mit gegenüber Isocyanaten reaktiven Gruppen, (c) nicht silikonhaltigen Stabilisator, (d) gegebenenfalls Kettenverlängerungs- und oder Vernetzungsmittel, (e) Katalysatoren, (f) Treibmittel und (g) gegebenenfalls Hilfsmittel und Zusatzstoffe, wobei der nicht silikonhaltigen Stabilisator (c) erhältlich ist durch Alkoxylierung eines 1 bis 8-funktionellen Startermoleküls mit Alkylenoxiden, wobei 0 bis 9 Gew.-% der eingesetzten Alkylenoxyde Ethylenoxid ist, 0 bis 50 Gew.-% der eingesetzten Alkylenoxide 1,2 Propylenoxid und mindestens 50 Gew.-% der eingesetzten Alkylenoxide mindestens 4 Kohlenstoffatomen aufweisen und das zahlenmittlere Molekulargewicht des nicht silikonhaltigen Stabilisators (c) 500 bis 20.000 g/mol beträgt und wobei der Gehalt an silikonbasiertem Schaumstabilisator kleiner als 0,3 Gew.-%, bezogen auf das Gesamtgewicht der Verbindungen (b), (c), (d), (e) und (f), ist. Dabei kann der nicht silikonhaltigen Stabilisator (c) auch der Isocyanatkomponente zugegeben werden, insbesondere wenn der nicht silikonhaltigen Stabilisator (c) keine gegenüber Isocyanat reaktive Gruppen enthält.

Neben dem erfindungsgemäßen Verfahren ist auch ein Polyurethanschaumstoff, erhältlich nach einem erfindungsgemäßen Verfahren Gegenstand der Erfindung. Die erfindungsgemäßen Polyurethane zeigen überraschenderweise nur eine geringe Emission organischer Substanzen und werden daher vorzugsweise in geschlossenen Räumen eingesetzt, beispielsweise als thermische Isoliermaterialien in Wohngebäuden, wie Isolierungen für Rohre und Kühlschränke, im Möbelbau, beispielsweise als Sitzpolster oder als Matratzen sowie im Automobilinnenraum, beispielsweise als Lenkräder, Armaturenbretter, Türverkleidungen, Teppichhinterschäumungen, akustische Schaumstoffe, wie Dachhimmel, sowie Kopfstützen oder Schaltknäufe. Schließlich ist auch ein erfindungsgemäßer nicht silikonhaltiger Stabilisator (c) Gegenstand der Erfindung, insbesondere ein nicht silikonhaltiger Stabilisator (c), der erhältlich ist durch Alkoxylierung eines 1 bis 8-funktionellen Startermoleküls mit 1,2-Epoxybutan und/oder 1,2-Epoxypentan, wobei mindestens 50 Gew.-% der zur Herstellung des Stabilisators (c) eingesetzten Alkylenoxide 1,2-Epoxybutan und/oder 1,2-Epoxypentan sind und das zahlenmittlere Molekulargewicht des nicht silikonhaltigen Stabilisators (c) 500 bis 20.000 g/mol beträgt, Gegenstand der Erfindung.

In Folgenden soll die vorliegende Erfindung anhand von Beispielen verdeutlicht werden.

Die folgenden Einsatzstoffe wurden verwendet:

Polyol A: Glycerin gestartetes Polyetherpolyol auf Basis von Ethylenoxid und Propylenoxid mit einer mittleren OH-Zahl von 28 mg KOH/g und einem Propylenoxidgehalt, bezogen auf das Gesamtgewicht des Polyethers, von 84 Gew.-%.

Polyol B: Glycerin gestartetes Polyetherpolyol auf Basis von Ethylenoxid und Propylenoxid mit einer mittleren OH-Zahl von 42 mg KOH/g und einem Ethylenoxidgehalt, bezogen auf das Gesamtgewicht des Polyethers, von 74 Gew.-%.

Isocyanat 1: Mischung von 41.5 Gew.-% 4,4'-MDI, 25,3 Gew.-% 2,4'MDI und 33,2 Gew.-%einer Mischung aus Diphenylmethandiisocyanat und höherkernigen Homologen des Diphenylmethandiisocyanats (Lupranat® M20S der BASF SE)

Katalysator 1: Lupragen® N201, Aminkatalysator der BASF SE.

Katalysator 2: Niax A-1, Aminkatalysator der Firma Momentive.

Katalysator 3: Jeffcat® ZF10, Aminkatalysator der Firma Huntsman.

Katalysator 4: Jeffcat® Z-130, Aminkatalysator der Firma Huntsman.

Stabilisator 1: Tegostab® B 8715 LF2, Organosiloxan-polyethercopolymer, konventioneller Silikonbasierter Schaumstabilisator der Firma Evonik

Stabilisator 2: 1,2-Propylenglycol gestartetes Polyetherpolyol mit einer mittleren OH-Zahl von 74 mg KOH/g und 53,7 Gew.-% Butylenoxid und 42,2 Gew.-% Ethylenoxid, jeweils bezogen auf das Gesamtgewicht des Polyetherpolyols, wobei das Ethylenoxid als Endblock eingesetzt wurde.

Stabilisator 3: 1,2-Propylenglycol gestartetes Polyetherpolyol mit einer mittleren OH-Zahl von 34 mg KOH/g und 79 Gew.-% Butylenoxid und 19,3 Gew.-% Ethylenoxid, jeweils bezogen auf das Gesamtgewicht des Polyetherpolyols, wobei das Ethylenoxid als Endblock eingesetzt wurde.

Stabilisator 4: 1,2-Propylenglycol gestartetes Polyetherpolyol mit einer mittleren OH-Zahl von 26 mg KOH/g und 60,6 Gew.-% Butylenoxid und 38,3 Gew.-% Ethylenoxid, jeweils bezogen auf das Gesamtgewicht des Polyetherpolyols, wobei das Ethylenoxid als Endblock eingesetzt wurde.

Stabilisator 5: Dipropylenglycol gestartetes Polyetherpolyol mit ausschließlich 1,2-Epoxybutan als Alkylenoxid und mit einer mittleren OH-Zahl von 44 mg KOH/g.

Stabilisator 6: Dipropylenglycol gestartetes Polyetherpolyol mit ausschließlich 1,2-Epoxybutan als Alkylenoxid und mit einer mittleren OH-Zahl von 33 mg KOH/g.

Stabilisator 7: Dipropylenglycol gestartetes Polyetherpolyol mit ausschließlich 1,2-Epoxybutan als Alkylenoxid und mit einer mittleren OH-Zahl von 26 mg KOH/g.

Stabilisator 8: Dipropylenglycol gestartetes Polyetherpolyol mit ausschließlich 1,2-Epoxybutan als Alkylenoxid und mit einer mittleren OH-Zahl von 21 mg KOH/g.

Stabilisator 9: Dipropylenglycol gestartetes Polyetherpolyol mit ausschließlich 1,2-Epoxypentan als Alkylenoxid und mit einer mittleren OH-Zahl von 47 mg KOH/g.

Synthesis der nicht silikonhaltigen Schaumstabilisatoren

Die Herstellung der Schaumstabilisatoren Stabilisator 1 bis 8 erfolgte in einem Stahlreaktor im Zweistufenverfahren. Dazu wurde in einer ersten Stufe durch Butoxylierung von Propylenglycol bzw. Dipropylenglycol unter KOH-Katalyse ein Vorprodukt hergestellt, dass anschließend in einem zweiten Schritt ebenfalls unter KOH-Katalyse butoxyliert und gegebenenfalls Etoxyliert wurde. Die Hydroxylzahl des erhaltenen Polyols wurde nach Aufreinigung und Trocknung mittels Titration bestimmt. Zur Herstellung von Stabilisator 9 wurde analog verfahren, wobei anstelle von KOH CsOH eingesetzt wurde.

Zur Herstellung der Beispiele und Vergleichsbeispiele wurden 94 Gew.-Teile Polyol A, 6 Gew.-Teile Polyol B, 0,6 Gew.-Teile Katalysator 1, 0,1 Gew.-Teil Katalysator 2, 3,3 Gew.-Teile Wasser und die in Tabelle 1 angegebene Menge des jeweiligen Stabilisators 2 Minuten mit einem Labormischer bei Raumtemperatur vermischt und 30 Minuten stehen gelassen. Anschließend wurde Isocyanat 1 zugegeben und bei einem Isocyanatindex von 90 mit einem Labormischer 5 Sekunden bei 1800 U/min vermischt und im Becher zum Polyurethanschaumstoff umgesetzt. Die Freischaumdichten betrugen ca. 45 g/L. Qualität, Zellstruktur und Erscheinungsbild des Schaumes wurden begutachtet. Analog wurden Formschaumstoffe erhalten, indem die Reaktionsmischung nach dem Vermischen in eine auf 50 °C temperierte Form mit 8 Liter Volumen (40cm x 40 cm x 5 cm) gegeben wurde. Die Einsatzmenge wurde so gewählt, dass der Formschaumstoff eine mittlere Dichte von 53 g/L aufwies. Nach 4 Minuten wurde der Schaumstoff entformt, gewalkt und 24 Stunden bei Raumtemperatur ruhen gelassen. Aus den Formschaumstoffen wurden Probenkörper für mechanischen Messungen und Emissionsmessungen entnommen. Die Qualität der freigeschäumten Schaumstoffe und der Formschaumstoffe wurde mit "gut" bewertet, wenn diese dimensionsstabil waren und nicht schrumpften, eine offene, feinzellige Zellstruktur und eine gleichmäßige Oberfläche ohne Fehlstellen aufwies. Wenn die Schaumstoffe eine grobzellige Struktur, mit Löchern im Schaumkern und in der Oberfläche aufwiesen wurden diese als "schlecht" bewertet.

Tabelle 1

| Vergleichsbeispiele | Stabilisatoren | Menge [Gewichtsteile] | Qualität freigeschäumter Schaumstoff | Qualität Formschaumstoff |
|---|---|---|---|---|
| 1 | ohne Stabilisator | 0 | schlecht | schlecht |
| 2 | Stabilisator 1 | 0,5 | gut | gut |
| 3 | Stabilisator 2 | 0,5 | schlecht | schlecht |
| 4 | Stabilisator 2 | 1 | schlecht | schlecht |
| 5 | Stabilisator 3 | 0,25 | schlecht | schlecht |
| 6 | Stabilisator 3 | 0,5 | schlecht | schlecht |
| 7 | Stabilisator 3 | 1 | schlecht | schlecht |
| 8 | Stabilisator 4 | 0,25 | schlecht | schlecht |
| 9 | Stabilisator 4 | 0,5 | schlecht | schlecht |

(fortgesetzt)

| Vergleichsbeispiele | Stabilisatoren | Menge [Gewichtsteile] | Qualität freigeschäumter Schaumstoff | Qualität Formschaumstoff |
|---|---|---|---|---|
| 10 | Stabilisator 4 | 1 | schlecht | schlecht |
| Beispiel | | | | |
| 1 | Stabilisator 5 | 0,5 | gut | gut |
| 2 | Stabilisator 5 | 1 | gut | gut |
| 3 | Stabilisator 6 | 0,5 | gut | gut |
| 4 | Stabilisator 6 | 1 | gut | gut |
| 5 | Stabilisator 7 | 0,25 | gut | gut |
| 6 | Stabilisator 8 | 0,25 | gut | gut |
| 7 | Stabilisator 9 | 0,5 | gut | gut |

Mechanische Messungen

Die mechanischen Messwerte in Tabelle 2 wurden folgendermaßen bestimmt:

Dichte: DIN EN ISO 845
Stauchhärte und Hysterese: DIN EN ISO 3386
Zugfestigkeit und Bruchdehnung: DIN EN ISO 1798,
Druckverformungsrest: DIN EN ISO 1856
Luftdurchlässigkeit: DIN EN ISO 7231
Rückprallelastizität: DIN EN ISO 8307

Tabelle 2 mechanische Eigenschaften ausgewählter Beispiel-Schaumstoffe

| Eigenschaften | Unit | Vergleichsbeispiel 1 | Beispiel 3 | Beispiel 5 |
|---|---|---|---|---|
| Dichte | $kg/m^3$ | 53 | 53 | 53 |
| Stauchhärte 40% | kPa | 4,9 | 4,7 | 4,4 |
| Hysterese | % | 23,9 | 23 | 22,7 |
| Zugfestigkeit | kPa | 85 | 94 | 85 |
| Bruchdehnung | % | 84 | 102 | 97 |
| Druckverformungsrest | % | 7,4 | 6,9 | 7,8 |
| Luftdurchlässigkeit | $dm^3/s$ | 1 | 0,8 | 0,7 |
| Rückprallelastizität | % | 57 | 58 | 59 |

Die Ergebnisse in Tabelle 1 und 2 belegen, dass der Einsatz der nicht silikonhaltigen Schaumstabilisatoren gemäß vorliegender Erfindung zu Schaustoffen führt, die üblicherweise nur unter Einsatz von silikonbasierten Schaumstabilisatoren erhalten wurden. Weiter zeigen die erfindungsgemäßen Schaumstabilisatoren deutlich geringere Emissionswerte von organischen Substanzen. Dies wird in Tabelle 4 gezeigt.

Emissionen

Zur Bestimmung der Emissionswerte wurden analog zu den oben angeführten Beispielen und Vergleichsbeispielen Schaumproben hergestellt. Dabei wurden die in Tabelle 3 gezeigten Einsatzstoffe verwendet. Als Isocyanatkomponente wurde Isocyanat 1 verwendet. Dabei wurde bei einem Isocyanatindex von 90 gearbeitet. Die Dichte der erhaltenen Schaumstoffe betrug ca. 50 $kg/m^3$. Dabei wurden die Emissionen wie unten angegeben bestimmt.

Tabelle 3:

|  | Vergleichsbeispiel I | Beispiel I | Beispiel II |
|---|---|---|---|
| Polyol A | 90,6 | 90,6 | 90,6 |
| Polyol B | 3 | 3 | 3 |
| Katalysator 3 | 0,1 | 0,1 | 0,1 |
| Katalysator 4 | 1 | 1 | 1 |
| Wasser | 3,9 | 3,9 | 3,9 |
| Glycerin | 0,5 | 0,5 | 0,5 |
| Diethanolamin | 0,4 | 0,4 | 0,4 |
| Stabilisator 1 | 0,5 |  |  |
| Stabilisator 5 |  | 0,5 |  |
| Stabilisatorr 6 |  |  | 0,5 |

Formaldehydemissionen wurden im Kammertest ermittelt:

Zur Bestimmung von Formaldehyd und Acetaldehyd wurde analog ASTM D-5116-06 vorgegangen. Die Kammergröße betrug 4,7 Litern. Als Polyurethanproben wurden Stücke mit einer Größe von 100 mm x 100 mm x 25 mm aus dem Innern des Schaumstoffs eingesetzt. Die Temperatur in der Meßkammer betrug während der Messung 65 ° C, die relative Luftfeuchtigkeit 50 %. Die Luftaustauschrate betrug 3,0 Liter pro Stunde. Der Abluftstrom mit flüchtigen Aldehyden aus dem Polyurethan wurden über 120 Minuten durch eine Kartusche mit 2,4-Dinitrophenylhydrazin beschichtetes Silika geleitet. Die DNPH-Kartusche wurde anschließend mit einem Gemisch von Acetonitril und Wasser eluiert. Die Konzentration von Formaldehyd und Acetaldehyd im Eluat wurde mittels HPLC bestimmt. Nach diesem Aufbau liegt die Nachweisgrenze für Formaldehydemissionen bei $\leq 11$ $\mu g/m^3$. und für Acetaldehydemissionen bei $\leq 6$ $\mu g/m^3$

VOC and FOG wurden nach VDA 278 ermittelt.

Tabelle 4:

|  |  | Unit | Vergleichsbeispiel I | Beispiel I | Beispiel II |
|---|---|---|---|---|---|
| Kammertest | Formaldehyd | $\mu$ g/m$^3$ | 924 | 679 | 843 |
|  | Acetaldehyd | $\mu$g/m$^3$ | 74 | 45 | 72 |
|  |  |  |  |  |  |
|  |  |  |  |  |  |
| VDA278 | VOC | ppm | 163 | 44 | 59 |
|  | VOC - Anteil Siloxan |  | 79 ppm Siloxan's | 0 ppm Siloxan | 0 ppm Siloxan |
|  | FOG | ppm | 77 | 54 | 58 |

**Patentansprüche**

1. Verfahren zur Herstellung von Polyurethanschaumstoffen, bei dem man

(a) Polyisocyanat,
(b) polymeren Verbindungen mit gegenüber Isocyanaten reaktiven Gruppen,
(c) nicht silikonhaltigen Stabilisator
(d) gegebenenfalls Kettenverlängerungs- und oder Vernetzungsmittel,
(e) Katalysatoren,
(f) Treibmittel,
(g) gegebenenfalls Hilfsmittel und Zusatzstoffe,
zu einer Reaktionsmischung vermischt und die Reaktionsmischung zum Polyurethan ausreagieren lässt,
wobei der nicht silikonhaltige Stabilisator (c) erhältlich ist durch Alkoxylierung eines 1 bis 8-funktionellen Startermoleküls mit Alkylenoxiden, wobei 0 bis 9 Gew.-% der eingesetzten Alkylenoxyde Ethylenoxid ist, 0 bis 50 Gew.-% der eingesetzten Alkylenoxide 1,2 Propylenoxid und mindestens 50 Gew.-% der eingesetzten Alkylenoxide mindestens 4 Kohlenstoffatomen aufweisen und das zahlenmittlere Molekulargewicht des nicht silikonhaltigen Stabilisators (c) 500 bis 20.000 g/mol beträgt,

der Anteil des nicht silikonhaltigen Schaumstabilisators (c), bezogen auf das Gesamtgewicht der Verbindungen (b), (c), (d), (e) und (f) 0,01 bis 10 Gew.-% beträgt und

der Gehalt an silikonbasiertem Schaumstabilisator kleiner als 0,3 Gew.-%, bezogen auf das Gesamtgewicht der Verbindungen (b), (c), (d), (e) und (f), ist.

2. Verfahren nach Anspruch 1, **dadurch gekennzeichnet, dass** mindestens 90 Gew.-% der eingesetzten Alkylenoxide bei der Herstellung des nicht silikonhaltige Stabilisator (c) mindestens 4 Kohlenstoffatomen aufweisen.

3. Verfahren nach Anspruch 1 oder 2, **dadurch gekennzeichnet, dass** die mindestens 4 Kohlenstoffatomen aufweisenden Alkylenoxide, die bei der Herstellung des nicht silikonhaltige Stabilisator (c) eingesetzt werden, ausgewählt sind aus der Gruppe, bestehend aus 1,2-Epoxybutan, 1,2-Epoxypentan und Mischungen davon.

4. Verfahren nach einem der Ansprüche 1 bis 3, **dadurch gekennzeichnet, dass** die mittlere Funktionalität der Startermoleküle zur Herstellung des nicht silikonhaltige Stabilisator (c) eine Funktionalität von 1 bis 3 aufweist.

5. Verfahren nach einem der Ansprüche 1 bis 4, **dadurch gekennzeichnet, dass** nach der Alkoxylierung ein Teil oder alle der erhaltenen OH-Gruppen des nicht silikonhaltigen Stabilisators (c) verkappt werden.

6. Verfahren nach einem der Ansprüche 1 bis 5, **dadurch gekennzeichnet, dass** die polymeren Verbindungen mit gegenüber Isocyanaten reaktiven Gruppen, Polyetheralkohole (b1) enthalten, erhältlich durch Anlagerung von Ethylenoxid, Propylenoxid oder Mischungen davon, an ein Startermolekül, wobei mindestens 90 mol % der zur Herstellung des Polyetheralkohols (b1) eingesetzten Alkylenoxyde ausgewählt sind aus der Gruppe, bestehend aus Ethylenoxyd, 1,2 Propylenoxyd und Mischungen davon.

7. Verfahren nach einem der Ansprüche 1 bis 6, **dadurch gekennzeichnet, dass** kein silikonbasierter Schaumstabilisator eingesetzt wird.

8. Verfahren nach einem der Ansprüche 1 bis 7, **dadurch gekennzeichnet, dass** der Polyurethanschaumstoff ein Polyurethanweichschaumstoff mit einer Druckspannung bei 10 % Stauchung nach DIN 53 421 / DIN EN ISO 604 von 15 kPa und kleiner und einer Dichte von 10 bis 100 g/Liter ist.

9. Verfahren nach einem der Ansprüche 1 bis 8, **dadurch gekennzeichnet, dass** die Katalysatoren (e) einbaubare Aminkatalysatoren enthalten.

10. Polyolmischung, enthaltend

(b) polymeren Verbindungen mit gegenüber Isocyanaten reaktiven Gruppen,
(c) nicht silikonhaltigen Stabilisator
(d) gegebenenfalls Kettenverlängerungs- und oder Vernetzungsmittel,
(e) Katalysatoren,
(f) Treibmittel und
(g) gegebenenfalls Hilfsmittel und Zusatzstoffe,
wobei der nicht silikonhaltige Stabilisator (c) erhältlich ist durch Alkoxylierung eines 1 bis 8-funktionellen Startermoleküls mit Alkylenoxiden, wobei 0 bis 9 Gew.-% der eingesetzten Alkylenoxyde Ethylenoxid ist, 0 bis 50 Gew.-% der eingesetzten Alkylenoxide 1,2 Propylenoxid und mindestens 50 Gew.-% der eingesetzten Alkylenoxide mindestens 4 Kohlenstoffatomen aufweisen und das zahlenmittlere Molekulargewicht des nicht silikonhaltigen Stabilisators (c) 500 bis 20.000 g/mol beträgt,
der Anteil des nicht silikonhaltigen Schaumstabilisators (c), bezogen auf das Gesamtgewicht der Verbindungen (b), (c), (d), (e) und (f) 0,01 bis 10 Gew.-% beträgt und
der Gehalt an silikonbasiertem Schaumstabilisator kleiner als 0,3 Gew.-%, bezogen auf das Gesamtgewicht der Verbindungen (b), (c), (d), (e) und (f), ist.

11. Polyurethan, erhältlich nach einem Verfahren gemäß einem der Ansprüche 1 bis 9.

**12.** Verwendung eines Polyurethans gemäß Anspruch 11 in geschlossenen Räumen oder im Innern von Fahrzeugen.

**13.** Verwendung gemäß Anspruch 12 zur Herstellung von Matratzen oder Sitzpolstern oder Kopfstützen in Fahrzeugen.

**Claims**

**1.** A process for producing polyurethane foams comprising mixing

(a) polyisocyanate,
(b) polymeric compounds having isocyanate-reactive groups,
(c) silicone-free stabilizer,
(d) optionally chain extending and/or crosslinking agents,
(e) catalysts,
(f) blowing agents,
(g) optionally auxiliaries and additives,
to form a reaction mixture and reacting the reaction mixture to afford the polyurethane,
wherein the silicone-free stabilizer (c) is obtainable by alkoxylation of a 1- to 8-functional starter molecule with alkylene oxides, wherein 0% to 9% by weight of the employed alkylene oxides is ethylene oxide, 0% to 50% by weight of the employed alkylene oxides is 1,2-propylene oxide and at least 50% by weight of the employed alkylene oxides comprise at least 4 carbon atoms and the number-average molecular weight of the silicone-free stabilizer (c) is 500 to 20 000 g/mol,
the proportion of the silicone-free foam stabilizer (c), based on the total weight of the compounds (b), (c), (d), (e) and (f), is 0.01% to 10% by weight and
the content of silicone-based foam stabilizer is less than 0.3% by weight, based on the total weight of the compounds (b), (c), (d), (e) and (f).

**2.** The process according to claim 1, wherein at least 90% by weight of the employed alkylene oxides in the production of the silicone-free stabilizer (c) comprise at least 4 carbon atoms.

**3.** The process according to claim 1 or 2, wherein the alkylene oxides comprising at least 4 carbon atoms employed in the production of the silicone-free stabilizer (c) are selected from the group consisting of 1,2-epoxybutane, 1,2-epoxypentane and mixtures thereof.

**4.** The process according to any of claims 1 to 3, wherein the average functionality of the starter molecules for production of the silicone-free stabilizer (c) has a functionality of 1 to 3.

**5.** The process according to any of claims 1 to 4, wherein some or all of the retained OH groups of the silicone-free stabilizer (c) are capped after the alkoxylation.

**6.** The process according to any of claims 1 to 5, wherein the polymeric compounds having isocyanate-reactive groups comprise polyether alcohols (b1) obtainable by addition of ethylene oxide, propylene oxide or mixtures thereof onto a starter molecule, wherein at least 90 mol% of the alkylene oxides used for production of polyether alcohol (b1) are selected from the group consisting of ethylene oxide, 1,2-propylene oxide and mixtures thereof.

**7.** The process according to any of claims 1 to 6, wherein no silicone-based foam stabilizer is employed.

**8.** The process according to any of claims 1 to 7, wherein the polyurethane foam is a flexible polyurethane foam having a compressive stress at 10% compression according to DIN 53 421 / DIN EN ISO 604 of 15 kPa or less and a density of 10 to 100 g/liter.

**9.** The process according to any of claims 1 to 8, wherein the catalysts (e) comprise incorporable amine catalysts.

**10.** A polyol mixture comprising

(b) polymeric compounds having isocyanate-reactive groups,
(c) silicone-free stabilizer,
(d) optionally chain extending and/or crosslinking agents,

(e) catalysts,
(f) blowing agents and
(g) optionally auxiliaries and additives,
wherein the silicone-free stabilizer (c) is obtainable by alkoxylation of a 1- to 8-functional starter molecule with alkylene oxides, wherein 0% to 9% by weight of the employed alkylene oxides is ethylene oxide, 0% to 50% by weight of the employed alkylene oxides is 1,2-propylene oxide and at least 50% by weight of the employed alkylene oxides comprise at least 4 carbon atoms and the numberaverage molecular weight of the silicone-free stabilizer (c) is 500 to 20 000 g/mol,
the proportion of the silicone-free foam stabilizer (c), based on the total weight of the compounds (b), (c), (d), (e) and (f), is 0.01% to 10% by weight and
the content of silicone-based foam stabilizer is less than 0.3% by weight, based on the total weight of the compounds (b), (c), (d), (e) and (f).

11. A polyurethane obtainable by a process according to any of claims 1 to 9.

12. The use of a polyurethane according to claim 11 in enclosed spaces or in the interior of vehicles.

13. The use according to claim 12 for production of mattresses or seat cushions or headrests in vehicles.

**Revendications**

1. Procédé de préparation de mousses de polyuréthane, dans lequel on mélange

(a) du polyisocyanate,
(b) des composés polymères présentant des groupes réactifs vis-à-vis des isocyanates,
(c) un stabilisant ne contenant pas de silicone,
(d) le cas échéant des agents d'allongement de chaîne et/ou des réticulants,
(e) des catalyseurs,
(f) des agents gonflants,
(g) le cas échéant des adjuvants et des additifs,
en un mélange réactionnel et on laisse réagir le mélange réactionnel en polyuréthane,
le stabilisant ne contenant pas de silicone (c) pouvant être obtenu par alcoxylation d'une molécule de départ présentant une fonctionnalité de 1 à 8 avec des oxydes d'alkylène, 0 à 9% en poids des oxydes d'alkylène utilisés étant de l'oxyde d'éthylène, 0 à 50% en poids des oxydes d'alkylène utilisés étant de l'oxyde de 1,2-propylène et au moins 50% en poids des oxydes d'alkylène utilisés présentant au moins 4 atomes de carbone et le poids moléculaire moyen en nombre du stabilisant ne contenant pas de silicone (c) étant de 500 à 20.000 g/mole, la proportion du stabilisant de mousse ne contenant pas de silicone (c), par rapport au poids total des composés (b), (c), (d), (e) et (f), étant de 0,01 à 10% en poids et
la teneur en stabilisant de mousse à base de silicone étant inférieure à 0,3% en poids, par rapport au poids total des composés (b), (c), (d), (e) et (f).

2. Procédé selon la revendication 1, **caractérisé en ce qu'**au moins de 90% en poids des oxydes d'alkylène utilisés lors de la préparation du stabilisant ne contenant pas de silicone (c) présentent au moins 4 atomes de carbone.

3. Procédé selon la revendication 1 ou 2, **caractérisé en ce que** les oxydes d'alkylène présentant au moins 4 atomes de carbone, qui sont utilisés lors de la préparation du stabilisant ne contenant pas de silicone (c), sont choisis dans le groupe constitué par le 1,2-époxybutane, le 1,2-époxypentane et leurs mélanges.

4. Procédé selon l'une des revendications 1 à 3, **caractérisé en ce que** la fonctionnalité moyenne des molécules de départ pour la préparation du stabilisant ne contenant pas de silicone (c) a une fonctionnalité de 1 à 3.

5. Procédé selon l'une des revendications 1 à 4, **caractérisé en ce qu'**après l'alcoxylation, une partie des groupes OH obtenus ou tous les groupes OH obtenus du stabilisant ne contenant pas de silicone (c) sont bloqués.

6. Procédé selon l'une des revendications 1 à 5, **caractérisé en ce que** les composés polymères présentant des groupes réactifs vis-à-vis des isocyanates contiennent des polyéthéralcools (b1) pouvant être obtenus par addition d'oxyde d'éthylène, d'oxyde de propylène ou de leurs mélanges sur une molécule de départ, au moins 90% des oxydes d'alkylène utilisés lors de la préparation du polyétheralcool (b1) étant choisis dans le groupe constitué par l'oxyde d'éthylène, l'oxyde de 1,2-propylène et leurs mélanges.

7. Procédé selon l'une des revendications 1 à 6, **caractérisé en ce qu'**on n'utilise pas de stabilisant de mousse à base de silicone.

8. Procédé selon l'une des revendications 1 à 7, **caractérisé en ce que** la mousse de polyuréthane est une mousse souple de polyuréthane présentant une contrainte à la compression à un refoulement de 10% selon la norme DIN 53 421 / DIN EN ISO 604 de 15 kPa et moins et un poids spécifique de 10 à 100 g/litre.

9. Procédé selon l'une des revendications 1 à 8, **caractérisé en ce que** les catalyseurs (e) contiennent des catalyseurs d'amine incorporables.

10. Mélange polyol, contenant

   (b) des composés polymères présentant des groupes réactifs vis-à-vis des isocyanates,
   (c) un stabilisant ne contenant pas de silicone,
   (d) le cas échéant des agents d'allongement de chaîne et/ou des réticulants,
   (e) des catalyseurs,
   (f) des agents gonflants et
   (g) le cas échéant des adjuvants et des additifs,
   le stabilisant ne contenant pas de silicone (c) pouvant être obtenu par alcoxylation d'une molécule de départ présentant une fonctionnalité de 1 à 8 avec des oxydes d'alkylène, 0 à 9% en poids des oxydes d'alkylène utilisés étant de l'oxyde d'éthylène, 0 à 50% en poids des oxydes d'alkylène utilisés étant de l'oxyde de 1,2-propylène et au moins 50% en poids des oxydes d'alkylène utilisés présentant au moins 4 atomes de carbone et le poids moléculaire moyen en nombre du stabilisant ne contenant pas de silicone (c) étant de 500 à 20.000 g/mole,
   la proportion du stabilisant de mousse ne contenant pas de silicone (c), par rapport au poids total des composés (b), (c), (d), (e) et (f), étant de 0,01 à 10% en poids et
   la teneur en stabilisant de mousse à base de silicone étant inférieure à 0,3% en poids, par rapport au poids total des composés (b), (c), (d), (e) et (f).

11. Polyuréthane pouvant être obtenu selon un procédé selon l'une des revendications 1 à **9.**

12. Utilisation d'un polyuréthane selon la revendication 11 dans des espaces fermés ou à l'intérieur de véhicules.

13. Utilisation selon la revendication 12 pour la fabrication de matelas ou de rembourrages de sièges ou d'appui-têtes dans des véhicules.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016095128 A
- WO 9516721 A
- US 2013178548 A
- EP 2005010124 W
- EP 90444 A
- WO 05090440 A
- DE 111394
- US 3304273 A
- US 3383351 A
- US 3523093 A
- DE 1152536
- DE 1152537
- WO 2008055952 A
- WO 2009128279 A
- EP 1888664 A
- EP 1529792 A
- EP 2005010955 W
- EP 364854 A
- US 5506275 A
- EP 897402 A

**In der Beschreibung aufgeführte Nicht-Patentliteratur**

- Polyurethane. Kunststoffhandbuch. Carl Hanser Verlag, 1993, vol. 7
- Polyurethane. Kunststoffhandbuch. Carl Hanser-Verlag, 1993, vol. 7